# EUROPEAN PATENT SPECIFICATION

(11) **EP 2 279 060 B1**
(45) Date of publication and mention of the grant of the patent: **30.03.2016**
(21) Application number: 09746843.3
(22) Date of filing: 08.05.2009
(51) Int. Cl.: B25B 23/145, B25B 23/14

(54) **PNEUMATIC IMPULSE WRENCH WITH OPERATION CONTROL MEANS**
PNEUMATIKIMPULSSCHLÜSSEL MIT BETRIEBSSTEUERUNGSMITTEL
CLÉ À IMPULSION PNEUMATIQUE DOTÉE D'UN MOYEN DE COMMANDE DE FONCTIONNEMENT

(30) Priority: 14.05.2008 SE 0801087
(43) Date of publication of application: 02.02.2011
(73) Proprietor: Atlas Copco Industrial Technique AB, 105 23 Stockholm (SE)
(72) Inventor: NELSON, Anders Urban, SE-125 51 Älvsjö (SE)
(86) International application number: PCT/SE2009/000234
(87) International publication number: WO 2009/139683

(56) References cited:
- EP-A2- 0 900 632
- EP-A2- 0 900 632
- WO-A1-2005/063448
- US-A- 5 439 063
- US-A- 5 439 063

## Description

The invention relates to a pneumatic impulse wrench for tightening screw joints and including air flow controlling means for controlling the torque impulse magnitude delivered by the wrench and for interrupting the air supply to the wrench as a screw joint tightening target is reached.

A problem concerned with pneumatic impulse wrenches is to accomplish an accurate control of the tool operation, in particular to control and vary the magnitude of the output impulses during the tightening processes. Owing to the dynamic forces involved in impulse tightening there is some difficulty in getting a correct information of the torque magnitude actually delivered to a screw joint. It is also difficult to get a fast enough acting control of the pressure air flow through the tool to enable an accurate control of the tightening process. All this requires an electrically operated torque indicating means, an electrically activated air flow controlling valve means, and an electronic process control and monitoring unit.

The historic reason why such a fast acting operation control has not been used at pneumatic impulse wrenches is that these tools normally lack access to electric power, which means that electrically operated sensing means to provide feed back signals during tool operation have not been able to use. Neither has it been possible to use programmable electronic control units for accurately controlling and monitoring the tool operation.

Another reason why the torque impulse magnitudes delivered by a pneumatic impulse wrench has not been accurately controlled is that there have not been available air flow controlling valves acting fast enough and being small enough to be located at the power wrench close to the motor of the wrench. A location of the flow controlling valves close to the wrench motor is crucial to get a fast acting and accurate tool operation control.

In recent years, however, it has been possible to incorporate these features in pneumatic impulse wrench systems, since electric power and suitable valves have been made available. This means that electronic operation control and monitoring units have been made possible to use.

Today, electronically controlled pneumatic impulse wrenches are a part of prior art, and an example of such an impulse wrench system is described in US 5,439,063. The impulse wrench disclosed in that patent comprises a torque sensor generating electric signals in response to the output torque magnitude, a separate electronic control unit connected to the torque sensor, and a pressure-regulating valve located in the pressure air supply line and connected to the control unit. This arrangement makes it possible to vary the output torque of the impulse wrench during the tightening process so that the pressure air supply to the impulse wrench is reduced both at the beginning of the process to avoid overtightening by the first delivered impulse and when approaching the tightening target level. The signals obtained from the torque sensor onboard the wrench are used for governing the process, and the control unit is arranged to end the process by closing the pressure-regulating valve when a target torque level is reached. However, since the pressure regulating valve is located in the pressure air supply line at a distance from the wrench motor the operation control is rather slow.

In US 6,135,213 there is described another power control technique for impulse wrenches including a rather simple control means wherein the exhaust air flow from the wrench motor is controlled by a pressure activated exhaust valve. This exhaust valve is controlled by the back pressure from the wrench motor, such that during the initial pre-seating stage of a screw joint tightening process the valve opens just partly to keep down the motor speed. After the screw joint has been seated and when the torque resistance from the screw joint increases the resultant increase in back pressure from the motor shifts the exhaust valve to a fully open condition, whereby full power output of the motor is obtained. Any further adjustment of the output torque is not possible.

It is an object of the invention to provide an improved pneumatic impulse wrench by which the output magnitude of the delivered impulses may be accurately controlled by a programmable control unit so as to obtain a desired accurate control of the wrench operation during screw joint tightening processes. This improvement is achieved by a pneumatic impulse wrench according to claim 1.

Further objects and advantages of the invention will appear from the following specification and claims.

A preferred embodiment of the invention is described below in detail with reference to the accompanying drawing.

In the drawings
Fig. 1 shows a perspective view of a pneumatic impulse wrench connected to an operation control unit.
Fig. 2 shows on a larger scale and partly in section a side view of the wrench in Fig. 1.
Fig. 3 shows a longitudinal section through an inlet valve comprised in the impulse wrench in Figs. 1 and 2.
Fig. 4 shows a longitudinal section through an exhaust valve comprised in the impulse wrench in Figs. 1 and 2.

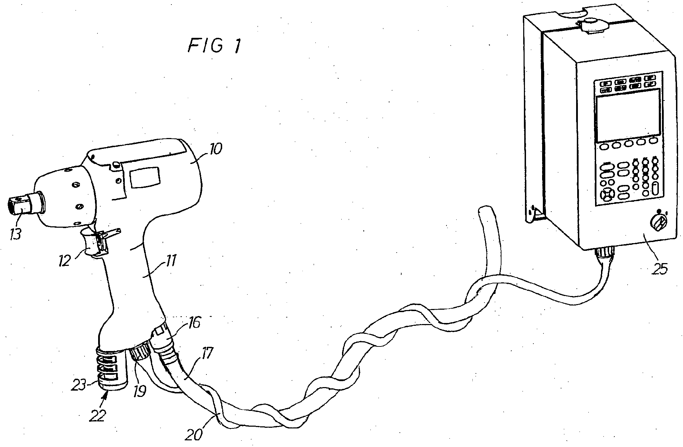

The power wrench shown in Fig. 1 comprises a housing 10 with a handle 11 and a throttle valve trigger 12. In the housing 10 there is supported a rotation motor, and an output shaft 13 is coupled to the motor via a non-illustrated hydraulic impulse generator. The handle 11 is also provided with a connection 16 for a pressure air supply conduit 17, a connection 19 for an electric cable 20, and an exhaust valve 22 provided with an outlet deflector 23 for directing exhaust air flow in a desired direction. The pressure air supply conduit 17 connects the impulse wrench to a pressure air source, whereas the cable 20 connects the impulse wrench to a remotely located stationary electronic process control unit 25. The control unit 25 is programmable to be able to make the impulse wrench carry out screw joint tightening operations according to desired tightening strategies.

The impulse wrench is provided with a means for indicating the output torque. Though not illustrated in detail, the impulse wrench comprises a torque indicating means in the form of a means arranged to deliver electric signals in response to the angular displacement of the inertia drive member of the impulse generator, wherein these signals are treated by electronic components onboard the wrench such that the rotation responsive signals are transformed into torque responsive output signals to be sent to the control unit 25 via a wiring 26 and the cable 20. This type of torque indicating means is previously known per se and does not form any part of this invention. See Swedish Patent 527 512. It is to be noted that other types of torque indicating or torque sensing means, like a torque transducer associated with the output shaft, may as well be used.

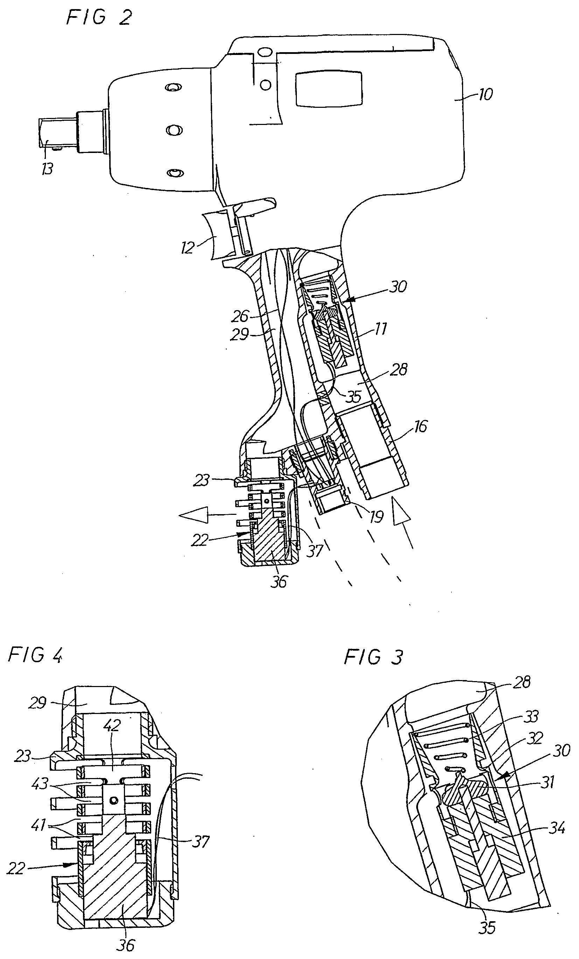

As illustrated in Fig. 2 the handle 11 comprises an air inlet passage 28 for communicating pressure air from the pressure air supply conduit 17 to the motor, and an outlet passage 29 for ducting exhaust air from the motor out of the wrench housing 10 via the exhaust valve 22 and the outlet deflector 23. In the inlet passage 28 there is located a non-illustrated throttle valve and an on-off valve 30. The latter is a bi-position valve comprising a movable valve element 31 and a seat 32, wherein the valve element 31 is biased toward an open position of the valve 30 by a spring 33 and arranged to be shifted to a closed position by an electromagnetic actuator 34. The latter is activated by electric power supplied via the cable 20 and a wiring 35 from the control unit 25 to stop the motor and end the tightening process.

The exhaust valve 22 is mounted at the outer end of the outlet passage 29 and arranged to control the exhaust air flow from the motor. The exhaust valve 22 is a proportional valve activated by a linearly operating electromagnetic actuator 36 connected to the control unit 25 via a wiring 37 and the cable 20. The very design of the electromagnetic actuator 36 is not crucial for the operation of the exhaust valve 22 and is therefore illustrated schematically only in Fig. 2 and 4. The exhaust valve 22 comprises a tubular valve casing 40 formed with a number of part-circumferential slots 41, and a valve element 42 longitudinally displaceable in the valve casing 40. The valve element 42 is also formed with a number of part-circumferential slots 43 arranged to coincide with the slots 41 of the valve casing 40 in an open position of the valve 22. See Fig. 4. By this multiple slot design of the valve casing 40 and the valve element 42 there is obtained a very short axial movement range of the valve element 42 between a fully open position and a closed position. This means a short and compact design of the exhaust valve 22.

As to the operation of the impulse wrench according to the invention it is important to accomplish an accurate control of the screw joint tightening process such that the delivered impulse energy is adapted to the characteristic of the actual screw joint to thereby safely obtain the desired target pretension condition of the screw joint. A functional feature of impulse wrenches is that the impulse generator may deliver a very high energy first impulse due to a relatively high rotation speed obtained during the initial low resistance pre-seating sequence. Such an initial high energy impulse becomes particularly strong at so called stiff screw joints, i.e. screw joints having a steep torque growth to rotation angle relationship. In certain cases this initial impulse may be strong enough to bring the screw joint directly to a pretension level above the target level. In order to avoid overtightening of the screw joint due to such an initial high energy impulse the control unit is programmed to start the tightening process by operating the wrench motor at reduced power. After the very first delivered impulse or impulses the motor power is increased and continuously adjusted to adapt the impulse energy of the succeeding impulses to the characteristic of the actual screw joint. As the installed torque approaches the target level the motor power is normally also reduced to avoid overtightening.

During the tightening process the inlet valve 30 is kept open by the spring 33, i.e. the valve element 31 is kept at a distance from the seat 32 allowing pressure air to pass unrestrictedly. When reaching the target torque or pretension level the control unit 25 send a signal via cable 20 and wiring 35 to the actuator 34 resulting in a shifting of the valve element 31 to closed position in cooperation with the seat 32. Now, the wrench motor is stopped and the tightening action of the wrench is interrupted.

As described above, the control of the wrench motor power output is accomplished by a program installed in the control unit 25 in the response to feed back signals received from the torque indicating device onboard the impulse wrench. The power control is carried out by adjustment of the opening area of the exhaust valve 22, which means that the exhaust air flow from the motor is more or less restricted by displacement of the valve element 42 in relation to valve casing 40 such that the opening slots 43 of the valve element 42 more or less coincide with slots 41 of the valve casing 40. The exhaust air flow through the exhaust valve 22 is continuously adjusted between different flow magnitudes so as to continuously adapt motor power to the instantaneously reported torque output from the torque indicating device, thereby avoiding a too fast torque growth in the screw joint with a risk for overtightening the screw joint on one hand or a too slow tightening operation on the other hand. The latter case may occur in case of a soft screw joint, i.e. a screw joint with a slow torque growth in relation to rotation angle. An undesired initial high energy impulse is avoided by starting the tightening process with a reduced exhaust air flow as described in connection with previously known impulse wrench systems.

By having a continuously fast acting exhaust air flow control and a fast acting air supply shut-off feature it is possible to obtain an accurate tightening process control and a universally adaptable system for tightening screw joints of different torque growth characteristics.

## Claims

1. Pneumatic impulse wrench for tightening screw joints, comprising a housing (10) with an air inlet passage (28), an exhaust air outlet passage (29), and a manually operated throttle valve, a motor, an output shaft (13), and an impulse unit coupling the motor to the output shaft (13), a torque indicating means for generating electric signals in response to the output torque, an electrically activated inlet valve (30) and a programmable operation control unit (25) communicating with the impulse wrench,
**characterized in that**
• the inlet valve (30) is located in the air inlet passage (28) and arranged to control the air flow through the air inlet passage (28),
• an electrically activated exhaust valve (22) is arranged to control the exhaust air flow through the outlet passage (29),
• wherein the control unit (25) is arranged to individually activate said inlet valve (30) and said exhaust valve (22) in accordance with a programmed tightening strategy and in relation to signals received from the torque indicating means.

2. Impulse wrench according to claim 1,
**characterized in that** said exhaust valve (22) is a proportional valve arranged to be activated by a linearly operated electromagnetic actuator (36) in response to signals from the control unit (25) for regulating the exhaust air flow during a screw joint tightening process.

3. Impulse wrench according to claim 2,
**characterized in that** said inlet valve (30) is a bi-position valve shiftable between an open position and a closed position, wherein said inlet valve (30) is spring biased towards open position and arranged to be shifted towards closed position by an electromagnetic actuator (34) activated by the control unit (25) to interrupt a tightening process as a tightening target condition is reached.

4. Impulse wrench according to anyone of claims 1-3,
**characterized in that** said exhaust valve (22) is arranged to be continuously adjusted during the tightening process between
• a flow restricting condition during the initial stage of a tightening process,
• high flow conditions during a pre-tensioning phase of the screw joint, and
a flow restricting condition when approaching the tightening target condition of the screw joint.

## Patentansprüche

1. Druckluft-Impulsschrauber zum Anziehen von Schraubverbindungen, umfassend ein Gehäuse (10) mit einem Lufteinströmkanal (28), einem Abluft-Ausströmkanal (29) und einem per Hand betriebenen Drosselventil, einen Motor, eine Abtriebswelle (13) und eine Impulseinheit, die den Motor mit der Abtriebswelle (13) verbindet, ein Drehmomentangabemittel zum Erzeugen elektrischer Signale als Reaktion auf das Ausgangsdrehmoment, ein elektrisch betätigtes Einlassventil (30) und eine programmierbare Betriebssteuerungseinheit (25), die mit dem Impulsschrauber Daten austauscht,
**dadurch gekennzeichnet, dass**
• das Einlassventil (30) in dem Lufteinströmkanal (28) befindlich und so angeordnet ist, dass es die Luftmenge durch den Lufteinströmkanal (28) regelt,
• ein elektrisch betätigtes Auslassventil (22) so angeordnet ist, dass es die Auslassluftmenge durch den Ausströmkanal (29) regelt,
• wobei die Steuereinheit (25) so angeordnet ist, dass sie einzeln das Einlassventil (30) und das Auslassventil (22) entsprechend einer programmierten Anziehstrategie und bezogen auf Signale betätigt, die sie von dem Drehmomentangabemittel empfängt.

2. Impulsschrauber nach Anspruch 1,
**dadurch gekennzeichnet, dass** das Auslassventil (22) ein Proportionalventil ist, das so angeordnet ist, dass es von einem linear betriebenen elektromagnetischen Aktor (36) als Reaktion auf Signale von der Steuereinheit (25) zum Regulieren der Auslassluftmenge während eines Vorgangs zum Anziehen von Schraubverbindungen betätigt wird.

3. Impulsschrauber nach Anspruch 2,
**dadurch gekennzeichnet, dass** das Einlassventil (30) ein Zweistellungsventil ist, das zwischen einer offenen Stellung und einer geschlossenen Stellung umschaltbar ist, wobei das Einlassventil (30) federnd in Richtung der offenen Stellung vorgespannt und so angeordnet ist, dass es von einem elektromagnetischen Aktor (34), der von der Steuereinheit (25) angesteuert wird, in Richtung der geschlossenen Stellung umgeschaltet wird, damit ein Anziehvorgang unterbrochen wird, wenn eine Anziehzielzustand erreicht ist.

4. Impulsschrauber nach einem der Ansprüche 1 bis 3,
**dadurch gekennzeichnet, dass** das Auslassventil (22) so angeordnet ist, dass es während des Anziehvorgangs kontinuierlich angepasst wird zwischen
• einem Mengenbegrenzungszustand während der Anfangsphase eines Anziehvorgangs,
• Zuständen mit hohen Mengen während einer Vorspannphase der Schraubverbindung und
einem Mengenbegrenzungszustand, wenn sich dem Anziehzielzustand der Schraubverbindung genähert wird.

## Revendications

1. Clé à impulsion pneumatique destinée au serrage d'assemblages à vis, comprenant un boîtier (10) doté d'un passage d'entrée d'air (28), d'un passage de sortie d'air évacué (29), et d'une soupape d'étranglement à actionnement manuel, un moteur, un arbre de sortie (13), et une unité à impulsions couplant le moteur à l'arbre de sortie (13), un moyen d'indication de couple destiné à générer des signaux électriques en réaction au couple de sortie, une soupape d'entrée (30) à activation électrique et une unité de commande de fonctionnement (25) programmable communiquant avec la clé à impulsion,
**caractérisée en ce que**
• la soupape d'entrée (30) est située dans le passage d'entrée d'air (28) et agencée pour commander le débit d'air à travers le passage d'entrée d'air (28),
• une soupape d'évacuation (22) à activation électrique est agencée pour commander le débit d'air évacué à travers le passage de sortie (29),
• l'unité de commande (25) étant agencée pour activer individuellement ladite soupape d'entrée (30) et ladite soupape d'évacuation (22) en fonction d'une stratégie de serrage programmée et en rapport avec des signaux reçus du moyen d'indication de couple.

2. Clé à impulsion selon la revendication 1,
**caractérisée en ce que** ladite soupape d'évacuation (22) est une soupape proportionnelle agencée pour être activée par un actionneur électromagnétique (36) à actionnement linéaire en réaction à des signaux en provenance de l'unité de commande (25) pour réguler le débit d'air d'évacuation pendant un processus de serrage d'assemblage à vis.

3. Clé à impulsion selon la revendication 2,
**caractérisée en ce que** ladite soupape d'entrée (30) est une soupape double position pouvant être déplacée entre une position ouverte et une position fermée, ladite soupape d'entrée (30) étant sollicitée par ressort vers la position ouverte et agencée pour être déplacée vers la position fermée par un actionneur électromagnétique (34) activé par l'unité de commande (25) afin d'interrompre un processus de serrage lorsqu'un état cible de serrage est atteint.

4. Clé à impulsion selon l'une quelconque des revendications 1 à 3,
**caractérisée en ce que** ladite soupape d'évacuation (22) est agencée pour être réglée en continu pendant le processus de serrage entre
• un état de limitation du débit pendant un stade initial d'un processus de serrage,
• des états de débit élevé pendant une phase de précontrainte de l'assemblage à vis, et
un état de limitation du débit à l'approche de l'état cible de serrage de l'assemblage à vis.
